# EUROPEAN PATENT APPLICATION

(11) **EP 4 730 251 A1**
(43) Date of publication of application: **22.04.2026**
(21) Application number: 25209653.2
(22) Date of filing: 20.10.2025
(51) Int. Cl.: G06Q 40/08

(54) **METHOD AND SYSTEM FOR IDENTIFYING FRAUDS IN UNEMPLOYMENT INSURANCE CLAIMS USING HYBRID WEIGHTED DECISION MODEL**

(30) Priority: 21.10.2024 IN 202421079973
(71) Applicant: Tata Consultancy Services Limited, Maharashtra (IN)
(72) Inventor: PANIGRAHY, Sanjaya Kumar, 751024 Bhubaneswar, Odisha (IN); PATTANAIK, Bhabani Sankar, 751024 Bhubaneswar, Odisha (IN)
(74) Representative: Goddar, Heinz J.

(57) **Abstract**

This disclosure relates generally to method and system for identifying frauds in unemployment insurance claims using hybrid weighted decision model. The method combines predictive power of machine learning models with domain knowledge infused key fraud indicators and network analysis to identify false positive claims. Initially, a set of claim information from a request of a claimant is extracted to assess risk affecting eligibility of the claimant to receive benefits. Further, a classification probability for a set of key fraud indicators are predicted for each claim using a set of top features associated with a prescient artificial intelligence (AI) model. Finally, one or more frauds associated with the unemployment insurance claim of the claimant are identified based on the weighted probability of each claim, a network diagram generated using the weighted probability for each claim, a set of filtered claims, and a set of business rules.

## Description

### CROSS-REFERENCE TO RELATED APPLICATIONS AND PRIORITY

The present application claims priority to Indian application no. 202421079973, filed on October 21, 2024.

### TECHNICAL FIELD

The disclosure herein generally relates to fraud detection and, more particularly, to method and system for identifying frauds in unemployment insurance claims using hybrid weighted decision model.

### BACKGROUND

Many state unemployment insurance agencies manage their unemployment insurance ("UI") programs using multiple computer systems and workforces. Insurance fraud puts insurance businesses at risk. Specifically, unemployment insurance fraud happens when someone provides false, misreported, or unreported information when filing a claim to collect fraudulent unemployment benefits. UI fraud was especially prevalent during the Covid-19 pandemic. Numerous reports have found that unemployment insurance fraud spiked during the pandemic.

In particular, schemes involving fraudsters using claimants stolen identifying information to claim unemployment benefits became widespread across the country. These fraud schemes victimize innocent people, negatively impact the employers who pay taxes into the unemployment system and put a strain on limited public resources. Traditionally, Government agencies follow suit when screening for fraud claims. Existing method involves supervised model which tend to produce many false positive cases for claims provided by the claimant which is complex.

### SUMMARY

Embodiments of the present disclosure present technological improvements as solutions to one or more of the above-mentioned technical problems recognized by the inventors in conventional systems. For example, in one embodiment, a system for identifying frauds in unemployment insurance claims using hybrid weighted decision model is provided. The system includes extracting a set of claim information from a request of a claimant to assess risk affecting eligibility of the claimant to receive benefits. The set of claim information comprises one or more demographics data, skill and employment data, and an industry data, and one or more claims. Further, a set of key fraud indicators are determined by performing a correlation analysis on the set of claim information using a correlation score. Then, a classification probability for the set of key fraud indicators for each claim is predicted using a set of top features associated with a prescient artificial intelligence AI model. Further, one or more outliers from each claim that are excluded from the set of claim information is identified using the LLM. Furthermore, a weighted probability for each claim is generated using a hybrid weighted decision model. Finally, one or more frauds associated with the unemployment insurance claim of the claimant is identified based on the weighted probability of each claim, a network diagram generated using the weighted probability for each claim, a set of filtered claims, and a set of business rules.

In another aspect, a method for identifying frauds in unemployment insurance claims using hybrid weighted decision model is provided. The method includes extracting a set of claim information from a request of a claimant to assess risk affecting eligibility of the claimant to receive benefits. The set of claim information comprises one or more demographics data, skill and employment data, and an industry data, and one or more claims. Further, a set of key fraud indicators are determined by performing a correlation analysis on the set of claim information using a correlation score. Then, a classification probability for the set of key fraud indicators for each claim is predicted using a set of top features associated with a prescient artificial intelligence AI model. Further, one or more outliers from each claim that are excluded from the set of claim information is identified using the LLM. Furthermore, a weighted probability for each claim is generated using a hybrid weighted decision model. Finally, one or more frauds associated with the unemployment insurance claim of the claimant is identified based on the weighted probability of each claim, a network diagram generated using the weighted probability for each claim, a set of filtered claims, and a set of business rules.

In yet another aspect, a non-transitory computer readable medium for identifying frauds in unemployment insurance claims using hybrid weighted decision model is provided. The system includes extracting a set of claim information from a request of a claimant to assess risk affecting eligibility of the claimant to receive benefits. The set of claim information comprises one or more demographics data, skill and employment data, and an industry data, and one or more claims. Further, a set of key fraud indicators are determined by performing a correlation analysis on the set of claim information using a correlation score. Then, a classification probability for the set of key fraud indicators for each claim is predicted using a set of top features associated with a prescient artificial intelligence AI model. Further, one or more outliers from each claim that are excluded from the set of claim information is identified using the LLM. Furthermore, a weighted probability for each claim is generated using a hybrid weighted decision model. Finally, one or more frauds associated with the unemployment insurance claim of the claimant is identified based on the weighted probability of each claim, a network diagram generated using the weighted probability for each claim, a set of filtered claims, and a set of business rules.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG.1 illustrates an exemplary system for identifying frauds in unemployment insurance claims according to some embodiments of the present disclosure.
FIG.2 is a functional block diagram illustrating to identify false positive fraud occurrence in unemployment insurance claims using the system of FIG.1, in accordance with some embodiments of the present disclosure.
FIG.3 (collectively referred as FIG.3A and FIG.3B) is a flow diagram illustrating a method to detect false positive frauds using the system of FIG.1, in accordance with some embodiments of the present disclosure.
FIG.4 depicts a network diagram generated for the insurance claim using the system of FIG.2, in accordance with some embodiments of the present disclosure.
FIG.5 depicts a prescient model training using the system of FIG.2, in accordance with some embodiments of the present disclosure.
FIG.6 depicts a outlier detection to detect outlier probability for each claim using the system of FIG.2, in accordance with some embodiments of the present disclosure.
FIG.7 depicts a weighted decision model using the system of FIG.2. in accordance with some embodiments of the present disclosure.
FIG.8 depicts a optimization component to identify one or more frauds associated with each claim provided by the claimant using the system of FIG.2, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

### GLOSSARY :

UI refers to unemployment insurance is a benefit given to those registering as becoming unemployed through no fault of their own, and often on conditions.

Claimant refers to a subject who is unemployed and filing an unemployment insurance claim
Imbalanced data refers to a dataset where the distribution of fraud and non-fraud data is skewed.

Key Fraud Indicator refers to claim attributes that significantly increases the probability of fraud.

Unemployment Insurance (UI) helps individuals with financial aid in the event of individual loses employment. Individual or claimant can file a claim application to corresponding resident state's unemployment insurance department. Once filed and approved, the individual is registered as claimant. Every week claimant can draw certain amount called benefits from the department. Claimants undergo through a questionnaire every week, which is called weekly certification in order to collect benefits. Every government has a set of laws or rules and department derived policies for the claimant to be eligible to draw the benefits. Individual claimant is considered as misrepresentation either if the claimant has no intention to draw claims or the intended claimant provided information is intentionally modified to be eligible to draw the benefits. In such scenario, the method addresses the problem of identifying claimants eligibility for drawing these benefits based on the information provided to the department using combination of artificial intelligence (AI), key fraud indicators, business rule extraction and by performing network analysis.

Embodiments of the present disclosure provides a method and system to detect frauds occurred in unemployment insurance claims using hybrid weighted decision model. The method enables to identify and halt unemployment insurance claims fraud occurred quickly and efficiently. Unemployment insurance fraud detection makes data extraction for insurer provided diverse resources easy. Insures must prevent fraudulent claims, ultimately boosting profits and overall performance. Using machine learning techniques, insurers can create a centralized data repository to analyze extensive datasets, including policyholder details, insurance claims, and historical trends.

The method utilizes data analysis techniques such as outlier analysis, supervised modelling, text analytics and network analysis to identify potential frauds occurred in unemployment insurance records. Further, it also provides a holistic view or 360-degree view of claimant request or application for unemployment insurance claim. This method combines predictive power of machine learning models with domain knowledge infused key fraud indicators and network analysis. As the fraud data is usually imbalanced, LLMs are leveraged to balance the dataset for better model prediction. Key fraud indicators are automatically derived using different claimant areas in unemployment such as like claimant demographic, employment, skills, employment history, claim history, employment industry and thereof. Further, hybrid weighted decision model uses historical data along with other temporal information to predict probability of fraudulent claim. Along with predictive model, LLM based outlier detection is also carried out to identify pattern which doesn't match usual claim application process. Hybrid weighted decision model is a weighted calculation between predictive model and outlier detection. Each prediction by machine learning model is supported by an explainer which describes why and how the decision is made. Finally, a network analysis of claimant is considered to build a network which shows how the claimant relates to others and if there is indicator of fraud.

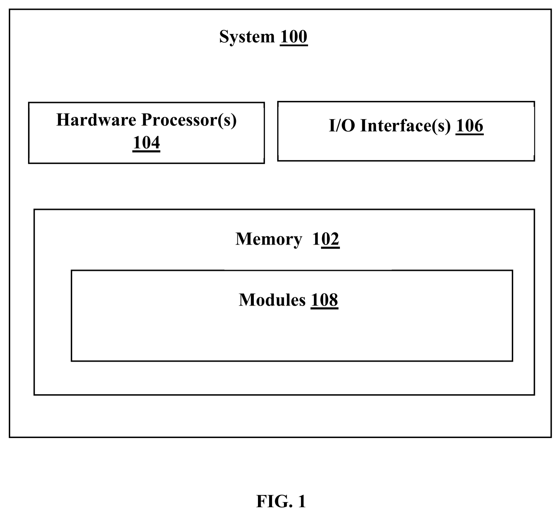

Referring now to the drawings, and more particularly to FIG.1 through FIG.8, where similar reference characters denote corresponding features consistently throughout the figures, there are shown preferred embodiments and these embodiments are described in the context of the following exemplary system and/or method.

FIG.1 illustrates an exemplary system for identifying frauds in unemployment insurance claims according to some embodiments of the present disclosure. In an embodiment, the system 100 includes processor (s) 104, communication interface (s), alternatively referred as or input/output (I/O) interface(s) 106, and one or more data storage devices or memory 102 operatively coupled to the processor (s) 104. The system 100, with the processor(s) is configured to execute functions of one or more functional blocks of the system 100.

Referring to the components of the system 100, in an embodiment, the processor (s) 104 can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the processor(s) 104 is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and the like.

The I/O interface(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface (s) 106 can include one or more ports for connecting a number of devices (nodes) of the system 100 to one another or to another server.

The memory 102 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes.

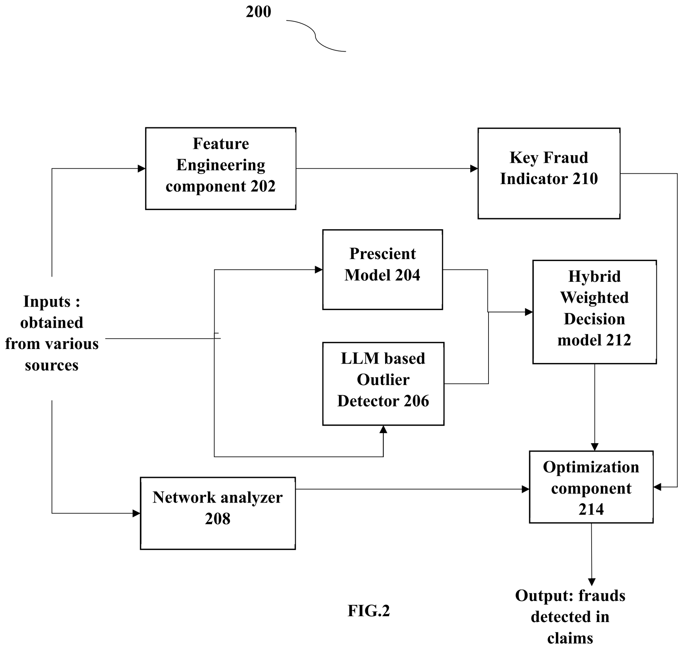

In an embodiment, the memory 102 includes a plurality of modules 108 can also include various sub-modules as depicted in FIG.2. The plurality of modules 108 include programs or coded instructions that supplement applications or functions performed by the system 100 for executing different steps involved in the process of providing data privacy in service operations of the system 100. The plurality of modules 108, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 108 can be used by hardware, by computer-readable instructions executed by the one or more hardware processors 104, or by a combination thereof.

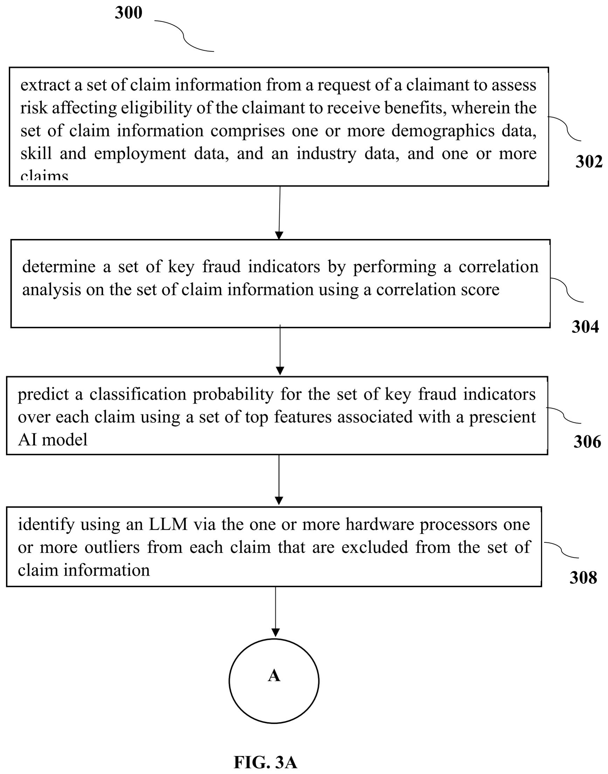

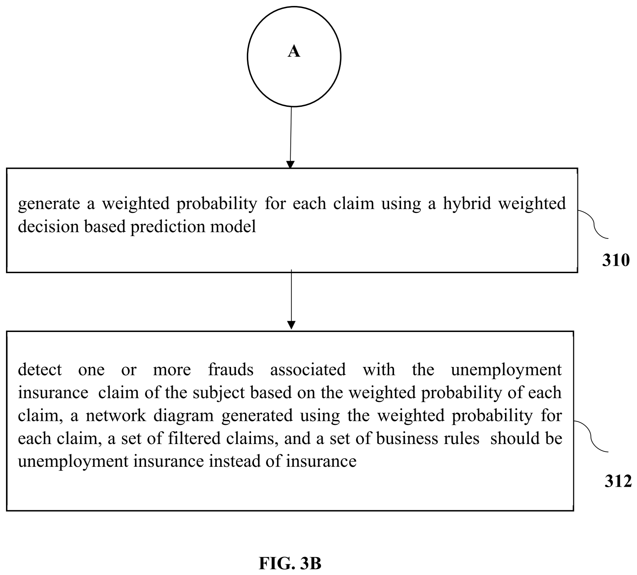

The memory 102 may comprise information pertaining to input(s)/output(s) of each step performed by the processor(s) 104 of the system 100 and methods of the present disclosure. Functions of the components of system 100, for identifying a false positive fraud occurrence in unemployment insurance claims, are explained in conjunction with FIG.2 and FIG.3 providing flow diagram, architectural overviews, and performance analysis of the system 100.

FIG.2 is a functional block diagram illustrating to identify false positive fraud occurrence in unemployment insurance claims using the system of FIG.1, in accordance with some embodiments of the present disclosure.

In one embodiment, wherein the system 200 includes a feature engineering component 202 which dynamically determines features categorized as key fraud indicators to complement claims analysis performed by customer service representatives for each claim submitted by the claimant. Then, a key fraud indicator analyzer 210 analyses claims matches frauds using the key fraud indicators.

Further, a network analyzer 208 generates a network diagram to eliminate occurrence of frauds associated with each claim provided by the claimant.

Further, a series of inputs are provided as training data to a prescient model 204 and a LLM based outlier detector 206 to detect outliers fraudulent claims associated with the input or claims provided by the claimant.

A hybrid weighted decision model 212 combines the output of prescient model 204 and the LLM based outlier detector 206 to predict outlier probability and a classification probability. Finally, a optimization component 216 identifies one or more frauds associated with each claim based on outputs of the weighted decision model 212 and the network analyzer 208.

FIG.3 (collectively referred as FIG.3A and FIG.3B) is a flow diagram illustrating a method to detect false positive frauds using the system of FIG.1, in accordance with some embodiments of the present disclosure. In an embodiment, the system 100 comprises one or more data storage devices or the memory 102 operatively coupled to the processor(s) 104 and is configured to store instructions for execution of steps of the method 300 by the processor(s) or one or more hardware processors 104. The steps of the method 300 of the present disclosure will now be explained with reference to the components or blocks of the system 100 as depicted in FIG.1 through FIG.2, and the steps of flow diagram as depicted in FIG.3. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Referring to the steps of the method 300, at step 302 the one or more hardware processors 104 is configured to extract a set of claim information from a request of a claimant to assess risk affecting eligibility of the claimant to receive benefits, wherein the set of claim information comprises one or more demographics data, skill and employment data, and an industry data, and one or more claims.

Considering an example, where the claimant provides the insurance claim including one or more claims to be processed to specific organization. Claims may be pertaining to insurance, risks or any other claims pertaining to recovery of funds from an institution. Unemployment benefit may include insurance or dynamic schemes as provided by the institution.

The feature engineering component 202 initially obtains the insurance claim provided by the claimant as input and processes the insurance claim by extracting the set of claim information. The set of claim information comprises demographics data, skill and employment data, and an industry data, and one or more claims or the like. The feature engineering component 202 involves creating new features manually as well as automatically. New functional features are created using domain knowledge whereas automatic features are created using numerical features and date and time features.

The demographics data may include location, address, gender, phone number, email address and the like.

The employment data refers to information on whether the claimant is employed, and current employment status, skill, industry, grade, job type and the like.

The industry data may include industry type, average salary, industry growth etc.

Referring to the steps of the method 300, at step 304 the one or more hardware processors 104 is configured to determine a set of key fraud indicators by performing a correlation analysis on the set of claim information using a correlation score.

Once the set of claim information are extracted from the insurance claim of the claimant, the key fraud indicator 210 combines columns of each claim or by deriving new values using mathematical formula and thereof. For example, age is calculated from date of birth field or deviation of the claimant salary from the industry average. Here, each key fraud indicator is designed where it creates variables such as industry average salary, frequent address change flag, claim frequency, education to job deviation and thereof. The automatic creation of features combines features mathematically (sum, max, min etc.) and statistically (mean, standard deviation etc.) on numerical features only. This is followed by doing a correlation analysis with the target variable from which final set of features are selected if they are significantly correlated directly or inversely. Standard correlation analysis algorithms are used to find correlation among the features and target variable (Table 1).

**Table 1 - Example - key fraud indicators**

| Attributes | Derivation Logic |
|---|---|
| AGE | Current Date - Date of Birth |
| LIVING_TOGETHER | If mailing address and residential address are same |
| PHONE_THEFT | If same phone number is used by other claimants |
| EMAIL_THEFT | If same email address is used by other claimants |
| ACC_NUMBER_THEFT | If same bank account number is used by other claimants |
| IS_ID_LOCAL | If the identity proof issued by local authority state |
| IS_ID_STATE_MATCH_RES | If the identity proof issued by residential state |
| IS_ID_STATE_MATCH_MAIL | If the id proof state matches with mailing address state |
| ID_EXPIRED | If the ID proof expired |
| IS_MAIL_STATE_LOCAL | If the mailing address is in the same state |
| IS_RES_STATE_LOCAL | If the residential address is in the same state |
| LIVING_TOGETHER | Is there anyone living in the same address |
| CORRESPONDING_TOGETHER | Is there any mailing address same |
| SAME_MAIL_RES_ADDR | If the mailing address and residential address same |
| SAME_WORK_PRE_RES_ZIP | If the zip code same for work and residential |
| INVALID_DOB | If DOB is a future date or less than 18 years old |

| | |
|---|---|
| IS_ACC_MISSING | If account no of missing in the claim |
| IS_BANKING_FRAUD | If same bank account is present |
| PHONE_THEFT | If duplicate phone number present |
| EMAIL_THEFT | If duplicate email address present |
| ACC_NUMBER_THEFT | If duplicate account present |
| STATE_ID_THEFT | If duplicate state id present |
| SKILL_COUNT | No of skills claimant has |
| VERY_HIGH_SKILL_COUNT | No of high skills claimant has |
| WORK_EXPERIENCE_IN _MONTHS | Total work exp in months |
| IS_WORK_EXP_AMBIGIOUS | Derived (Check if Age and work experience is ambiguous) |
| Is_ambigious_employee_count (Not considered) | Find if there are more claims than the number of employees reported by employer in last quarter |
| High_skill_count | Find if the claimant has high number of skills as compared to the average number of skills |

| | |
|---|---|
| Is_suspicious_skill_history | Find if the claimant skill doesn't match with previous application |
| IS_suspicious_DOB | Check if same claimant has many DOBs |
| Is_suspicious_education | Check if claimant has ambiguous education in recent claim |
| Mean_skill_count | Average skill count |
| Mean_age | Average claimant age |
| Std_skill_count | Skill count standard deviation |
| Std_age | Age standard deviation |
| Mean_claim_amount | Average claim amount |
| Std_claim_amount | Claim amount standard deviation |
| Mean_salary_amount | Average salary amount |
| Std_salary_amount | Salary amounts standard deviation |

At step of the method 300, at step 306 the one or more hardware processors 104 is configured to predict a classification probability for the set of key fraud indicators for each claim using a set of top features associated with a prescient AI model.

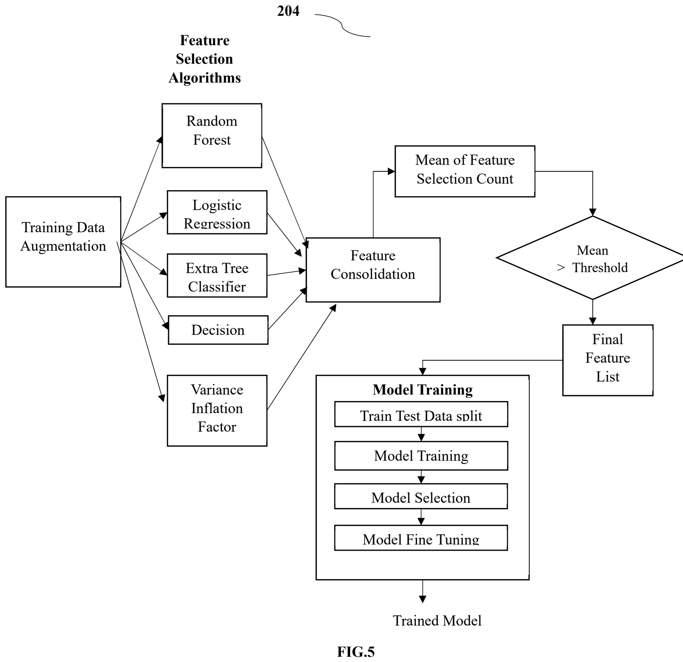

Once the set of key fraud indicators for each claim is determined from the previous step. The classification probability is predicted based on a set of top features. In one embodiment, the prescient AI model 204 (Referring now FIG.5) is trained by performing by initially obtaining a training dataset to a set of feature selection algorithms comprising at least one of a Random Forest, Extra Tree classifier, Logistic Regression, Variable Inference, and Decision Tree. The set of features are identified by each of the set of feature selection algorithms. Further, the set of features identified by the set of feature selection algorithms. Further, a mean of each feature is calculated by selecting the set of feature selection algorithms and a set of top features among the set of features based on a predefined threshold. Finally, the prescient model is trained with the set of top features to predict the classification probability for the set of key fraud indicators of each claim. Input data is then divided into train and test data set. The trained model provides probability of fraud for each claim. Using the probability of the model, a label is generated to indicate if a claim is fraud or not. The label is generated using a threshold value. The default value is set 0.50. Subsequently model accuracy is checked, and best performing model is selected. The threshold value is further optimized based on the model performance and further model is finetuned based on requirement.

At step of the method 300, at step 308 the one or more hardware processors 104 is configured to identify using a LLM one or more outliers from each claim that are excluded from the set of claim information.

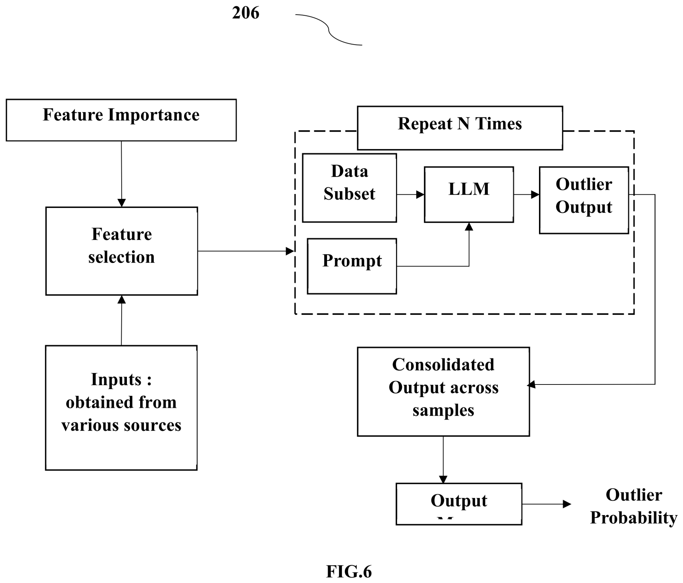

Referring now FIG.6, simultaneously, the LLM based outlier detector 206 detects on the fraud dataset to find claims which do not follow usual path on data in claim filing. LLMs are found to be better than traditional way of identifying outliers in the dataset as LLM based outlier detection is multi-dimensional. The LLM based outlier detector 206 also obtains inputs from various sources. The one or more outliers of each claim is identified by fragmenting the set of claim information into a set of claims data subsets and feeding each claim data subset of the set of claim data subsets, and a claim prompt to the LLM sequentially. The LLM identifies a set of outlier claims from each claim. Further, a respective outlier probability is assigned to each outlier claim of the plurality of outlier claims.

Here, the inputs are combined into one tabular format and fed to LLM to detect any claimant which is an outlier as compared to other claims. LLM takes the prompt and data and processes them to find any outlier present in the given data set. For e.g., if any claim having a claim amount which does not follow any pattern given the job type, industry, and location then that claim can be considered as an outlier. The prompt to the LLM is carefully designed with few examples of normal and outliers claims to guide the LLM for better outcome. The entire process of detecting outlier is supplemented with a final step where a probability value is assigned to each claim using an iterative sampling technique. As part of this technique, a subset of data using a subset of features is fed to LLM for outlier detection and the result (outlier or not outlier) is stored. The subset of features is selected using feature importance and its associated values. The same step is repeated for multiple times for a greater number of subsets of data. After all iterations, all the results are consolidated in a single place. Finally, the average of the consolidated result is taken which is nothing but the probability of the outlier.

At step of the method 300, at step 310 the one or more hardware processors 104 is configured to generate a weighted probability for each claim using a hybrid weighted decision model.

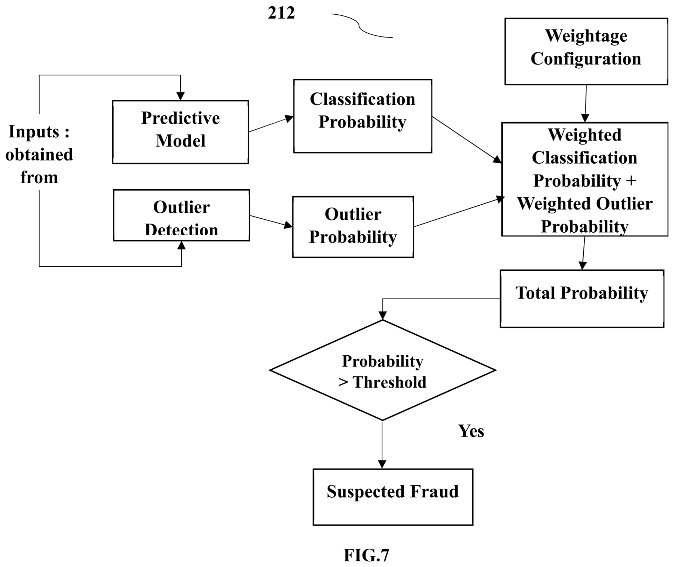

The hybrid weighted decision model 212 (Referring now FIG.7) obtains output of the outlier probability and the classification probability as inputs. The prediction is based on the hybrid weighted decision model which combines the prediction from classification model and outlier detection technique. The combination process is a mathematical calculation to find the final probability of the claim. The process of finding the weighted average is as followed to determine or configure the weightage of each data point. Here the data points are model prediction probability and the outlier probability. The weightage may differ for example, multiplying each data point with weightage and adding the results. If the weightage configuration is 50% each for prediction model and outlier probability the classification probability is 0.80 and outlier probability is 0.70. Therefore, the final probability is 50% of 0.80 + 50% of 0.70. So, the total probability is 0.40 + 0.35 = 0.75.

This hybrid weighted decision model 212 is further optimized by household analysis and business rules where the rules are extracted automatically using an explainability technique. This helps in eliminating the problem of false positives in fraud detection occurred in unemployment insurance domain. It is noted, relying on single approach may lead to overfit and induce more false positives. So, the recommendation is made by a weighted calculation using the prescient model prediction and outlier detected claims which provides accuracy.

Now at step of the method 300, at step 312 the one or more hardware processors 104 is configured to identify one or more frauds associated with the unemployment insurance claim of the claimant based on the weighted probability of each claim, a network diagram generated using the weighted probability for each claim, a set of filtered claims, and a set of business rules.

Finally, the optimization component 214 obtains output from the network analyzer 208 and the hybrid weighted decision model 212 which further processes to identify one or more frauds occurred in each claim.

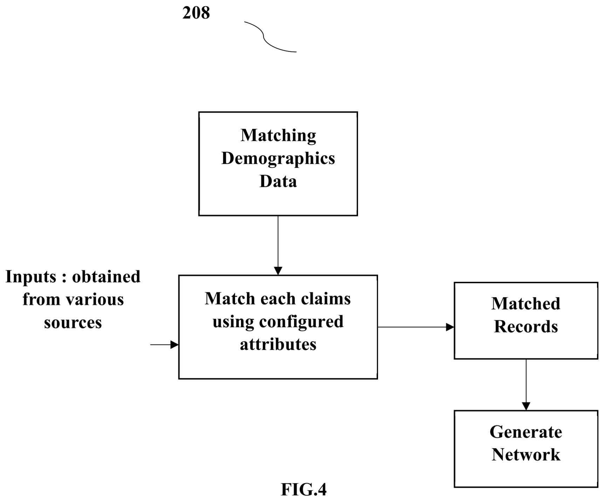

Referring now FIG.4, the network analyzer 208 generates the network diagram represents relationships between different claims, from the set of claim information to detect one or more frauds associated with the unemployment insurance for each claim of the claimant by identifying a set of matching claims for each claim based on multiple occurrence of at least one demographics data. Further, the network diagram is generated from the set of matching claims to detect one or more frauds associated with the unemployment insurance claim of the claimant.

The network analyzer 208 involves connection between different claimants using their demographical attributes (e.g., phone number, residential address and email address). If any of the attribute values are repetitive among claimants, then the claimants would be depicted in a network. Furthermore, this will also be provided with a text analysis-based comparison of data points for the connected claimants. Inputs to the network analyzer 208 are claimant data, demographics data in csv format. The processing of data is mostly done on the demographic data to find out duplicate claim records based on selected attributes. Here, few attributes like phone number, email address, house address etc. of a claim are checked against all other claim details and a relationship diagram in terms of network is created. Claims are considered as nodes and the matching attributes are considered as edges while creating the network examination diagram. Matching based on textual attributes is done using approximation algorithm to see the distance and considered to be same if the distance score is below a threshold. For e.g., if 2 claims are having same phone number, address, or email addresses then they are linked. The final output of the network diagram depicts relationship between different claims which can be examined by the business user and find the linked entities to find out if the claim is a misrepresentation or not.

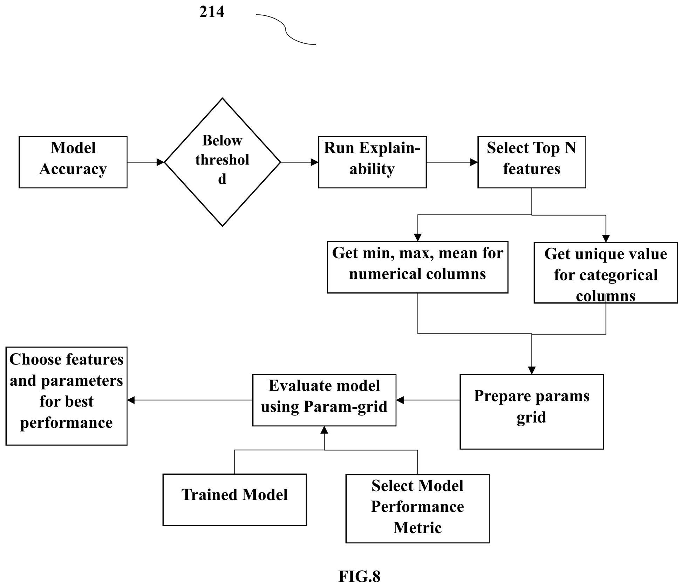

Referring now FIG.8, the optimization component 214 obtains the final output of the network diagram and the hybrid weighted decision model 212. Automatic rule prediction is made by the process more robust and resilient to customer specific data changes, business rule extraction would be done using the feature parameter grid. The feature parameter grid would be examined for the chosen model against a selected model evaluation metric. In other words, features which are impacting the predictions most are extracted using standard explain-ability algorithms. From the list of significant attributes, numerical and categorical features separated. For numerical columns, range of that feature is extracted from the training data set. Once the range is identified, a list of values is prepared using spread of the numerical data. Similarly for categorical features, unique values of features are extracted. Subsequently the feature parameter grid is prepared using numerical column spread and unique values present for categorical columns in the data set. Once the feature parameter grid is prepared, they are used to evaluate the model against a model performance metric. Model evaluation is done for all combinations of the parameter grid. The parameter values for which the model showed best results are used as part of business rules. The set of parameters and their values are selected as business rules where the model achieve highest accuracy.

Further, prediction reasoning substantiates model predictions using model explainability feature. Explainability helps users of the model in understanding the reason behind such prediction. The output of this step is a list of significant features and their weightage which are responsible for any prediction made by the model. The trained model and the data is used to find the explain-ability of the model. Here, the training data and the trained model is processed using standard algorithm to provide the explainability. The algorithm involves take the model, its feature weightage and the data to provide the list of significant features which resulted the prediction made by the model. Explainability of the model which refers to the list of model features which are highly impactful for the prediction made by the model. As part of the output, it provides the list of features and their weightage.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein addresses unresolved problem of fraud detection. The embodiment, thus provides method and system for identifying frauds in unemployment insurance claims using hybrid weighted decision model. Moreover, the embodiments herein further provides hybrid weighted decision model which combines the prediction from classification model and outlier detector. This hybrid prediction is further optimized and business rules where the rules are extracted automatically using the explain-ability technique. The approach is efficient which solves the problem of false positives to identify frauds in unemployment insurance domain.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (300) for identifying frauds in unemployment insurance claims, the method further comprising:
extracting (302) via one or more hardware processors, a set of claim information from a request of a claimant to assess risk affecting eligibility of the claimant to receive benefits, wherein the set of claim information comprises one or more demographics data, skill and employment data, and an industry data, and one or more claims;
determining (304) via the one or more hardware processors, a set of key fraud indicators by performing a correlation analysis on the set of claim information using a correlation score;
predicting (306) via the one or more hardware processors, a classification probability for the set of key fraud indicators for each claim using a set of top features associated with a prescient artificial intelligence (AI) model;
identifying (308) using a LLM via the one or more hardware processors, one or more outliers from each claim that are excluded from the set of claim information;
generating (310) via the one or more hardware processors, a weighted probability for each claim using a hybrid weighted decision model; and
identifying (312) via the one or more hardware processors, one or more frauds associated with the unemployment insurance claim of the claimant based on the weighted probability of each claim, a network diagram generated using the weighted probability for each claim, a set of filtered claims, and a set of business rules.

2. The processor-implemented method of claim 1, wherein the set of top features associated with the prescient AI model is trained by performing the steps of:
providing a training dataset to a set of feature selection algorithms further comprising at least one of a Random Forest, Extra Tree classifier, Logistic Regression, Variable Inference, and Decision Tree;
identifying a set of features by each of the set of feature selection algorithms;
consolidating the set of features identified by the set of feature selection algorithms;
calculating a mean of each feature of the set of features selected by the set of feature selection algorithms;
selecting a set of top features among the set of features based on a predefined mean value; and
training the prescient model with the set of top features to predict the classification probability for the set of key fraud indicators of each claim.

3. The processor-implemented method of claim 1, wherein the one or more outliers of each claim are identified by,
fragmenting the set of claim information into a set of claims data subsets;
feeding each claim data subset of the set of claim data subsets, and a claim prompt to the LLM sequentially, wherein the LLM identifies a set of outlier claims from each claim; and
assigning a respective outlier probability to each outlier claim of the plurality of outlier claims.

4. The processor-implemented method of claim 1, wherein the hybrid weighted decision model is a combination of the outlier probability and the classification probability.

5. The processor-implemented method of claim 1, wherein the hybrid weighted decision model generates the weighted probability.

6. The processor-implemented method of claim 1, wherein the network diagram represents relationships between different claims, from the set of claim information to detect one or more frauds associated with the unemployment insurance for each claim of the claimant by,
identifying a set of matching claims for each claim based on multiple occurrence of at least one demographics data; and
generating the network diagram from the set of matching claims to detect one or more frauds associated with the unemployment insurance claim of the claimant.

7. The processor-implemented method of claim 1, wherein the set of claim information are finetuned to detect the one or more frauds associated with the unemployment insurance claim of the claimant by linking each claims with the network diagram.

8. The processor-implemented method of claim 1, wherein the set of business rules are generated for the set of claims by preparing a feature parameter grid.

9. A system (100), for identifying frauds in unemployment insurance claims further comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
extract a set of claim information from a request of a claimant to assess risk affecting eligibility of the claimant to receive benefits, wherein the set of claim information comprises one or more demographics data, skill and employment data, and an industry data, and one or more claims;
determine a set of key fraud indicators by performing a correlation analysis on the set of claim information using a correlation score;
predict a classification probability for the set of key fraud indicators for each claim using a set of top features associated with a prescient artificial intelligence (AI) model;
identify using a LLM, one or more outliers from each claim that are excluded from the set of claim information;
generate a weighted probability for each claim using a hybrid weighted decision model; and
identify one or more frauds associated with the unemployment insurance claim of the claimant based on the weighted probability of each claim, a network diagram generated using the weighted probability for each claim, a set of filtered claims, and a set of business rules.

10. The system of claim 9, wherein the set of top features associated with the prescient artificial intelligence (AI) model is trained by performing the steps of:
providing a training dataset to a set of feature selection algorithms further comprising at least one of a Random Forest, Extra Tree classifier, Logistic Regression, Variable Inference, and Decision Tree;
identifying a set of features by each of the set of feature selection algorithms;
consolidating the set of features identified by the set of feature selection algorithms;
calculating a mean of each feature of the set of features selected by the set of feature selection algorithms;
selecting a set of top features among the set of features based on a predefined mean value; and
training the prescient AI model with the set of top features to predict the classification probability for the set of key fraud indicators of each claim.

11. The system of claim 9, wherein the one or more outliers of each claim are identified by,
fragmenting the set of claim information into a set of claims data subsets;
feeding each claim data subset of the set of claim data subsets, and a claim prompt to the LLM sequentially, wherein the LLM identifies a set of outlier claims from each claim; and
assigning a respective outlier probability to each outlier claim of the plurality of outlier claims.

12. The system of claim 9, wherein the hybrid weighted decision model is a combination of the outlier probability and the classification probability, wherein the hybrid weighted decision model generates the weighted probability.

13. The system of claim 9, wherein the network diagram represents relationships between different claims, from the set of claim information to detect one or more frauds associated with the unemployment insurance for each claim of the claimant by,
identifying a set of matching claims for each claim based on multiple occurrence of at least one demographics data; and
generating the network diagram from the set of matching claims to detect one or more frauds associated with the unemployment insurance claim of the claimant.

14. The system of claim 9, wherein the set of claim information are finetuned to detect the one or more frauds associated with the unemployment insurance claim of the claimant by linking each claims with the network diagram, wherein the set of business rules are generated for the set of claims by preparing a feature parameter grid.

15. One or more non-transitory machine-readable information storage mediums comprising one or more instructions which when executed by one or more hardware processors cause:
extracting a set of claim information from a request of a claimant to assess risk affecting eligibility of the claimant to receive benefits, wherein the set of claim information comprises one or more demographics data, skill and employment data, and an industry data, and one or more claims;
determining a set of key fraud indicators by performing a correlation analysis on the set of claim information using a correlation score;
predicting a classification probability for the set of key fraud indicators for each claim using a set of top features associated with a prescient artificial intelligence (AI) model;
identifying using a LLM one or more outliers from each claim that are excluded from the set of claim information;
generating a weighted probability for each claim using a hybrid weighted decision model; and
identifying one or more frauds associated with the unemployment insurance claim of the claimant based on the weighted probability of each claim, a network diagram generated using the weighted probability for each claim, a set of filtered claims, and a set of business rules.
